# FASCICULE DE BREVET EUROPEEN

(11) **EP 0 970 584 B1**
(45) Date de publication et mention de la délivrance du brevet: **02.01.2002**
(21) Numéro de dépôt: 98917253.1
(22) Date de dépôt: 26.03.1998
(51) Int. Cl.: H04N 7/15, H04N 7/14

(54) **SYSTEME DE VISIOCONFERENCE**
VIDEOKONFERENZSYSTEM
VIDEOCONFERENCE SYSTEM

(30) Priorité: 27.03.1997 FR 9703785
(43) Date de publication de la demande: 12.01.2000
(73) Titulaire: FRANCE TELECOM, 75015 Paris (FR)
(72) Inventeur: BUCHNER, Georges, F-75012 Paris (FR); MAHIEUX, Yannick, F-22140 Begard (FR); WIPLIEZ, Christian, F-22300 Lannion (FR); JULLIEN, Jean-Pascal, F-75003 Paris (FR)
(74) Mandataire: Ballot, Paul
(86) Numéro de dépôt international: FR9800625
(87) Numéro de publication internationale: WO9844734

(56) Documents cités:
- EP-A- 0 765 084
- WO-A-92/17035
- WO-A-94/16517
- US-A- 5 206 721
- SUSUMU ICHINOSE: "VISUAL TELEPHONE" 1 mars 1993 , NTT REVIEW, VOL. 5, NR. 2, PAGE(S) 59 - 66 XP000364720 voir page 64, alinéa 4.2 - page 65; figures 6-8
- PATENT ABSTRACTS OF JAPAN vol. 095, no. 008, 29 septembre 1995 & JP 07 135646 A (NEC ENG LTD;OTHERS: 01), 23 mai 1995,

## Description

L'invention concerne un système de visioconférence ou téléréunion entre participants localisés sur des sites distincts généralement distants.

Elle s'applique à des systèmes multi-points, c'est-à-dire à des systèmes permettant d'effectuer une liaison audiovisuelle entre des participants de plusieurs sites. Elle concerne aussi des systèmes point à point, c'est-à-dire des systèmes ne mettant en liaison audiovisuelle que deux sites. Elle s'applique également à des visiophones raccordés par des ponts de conférence.

Les équipements d'un système de visioconférence pour un site donné sont placés dans un local que l'on appelle dans la suite indifféremment salle ou studio. Les participants sont le plus souvent assis autour d'une table de conférence face à un écran de visualisation.

Aujourd'hui, les services et systèmes de visioconférence commercialisés proposent des liaisons en multi-points ayant une qualité audiovisuelle limitée due soit à la qualité des équipements d'extrémité (restitution du son et restitution d'image) soit intrinsèquement par l'absence de débit résultant de la limitation en bande passante due au réseau utilisé.

En effet, les systèmes de conférence sont raccordés sur des réseaux numériques, principalement sur le réseau RNIS selon plusieurs configurations en mode point à point ou en mode multi-points.

Ainsi sur le réseau NUMERIS le débit offert pour ce service varie entre 128 kbit/s pour le bas de gamme à 384 kbit/s pour le service de haut gamme.

Les terminaux utilisés sont conformes principalement à des standards ITU tels que l'ensemble des normes H320.

Dans certains systèmes, on ne peut voir qu'une seule salle distante à la fois. Cela gêne les utilisateurs qui ne peuvent pas voir tout le monde en même temps. Un système de commutation, manuel ou automatique, sélectionne la salle qui est présentée sur l'écran. En général, il s'agit de la salle qui transmet le signal audio le plus fort (commutation à la voix). C'est le cas des ponts de conférence qui commutent l'image en fonction d'une détection vocale, celle de la salle la plus active au niveau sonore.

D'autres systèmes utilisant la normalisation ITU de type H 320 ou H 323 ou autre, font intervenir une unité centrale pour recevoir les images de tous les Equipements Visioconférence Multipoints (EVM) (ou Multi Conférence Unit MCU) définis par les normes H 231 et H 243. Cette unité restitue des images en partageant la bande passante pour la transmission vers'un EVM autant de fois que d'images transmises.

Pour cela on réalise un codage qui comprime fortement le débit en ligne avec un facteur de compression de 40 à 50. On perd donc en définition environ les 3/4 de l'image transmise par chaque salle (multi-points jusqu'à 5 salles).

La compression numérique des images utilisée peut être de type H 320 avec un codage H 261 ou de type H 323 avec un codage H 263 ou de type moving JPEG (norme ISO) ou de type MPEG1 ou de type MPEG2.

Dans l'un quelconque des ces profils, les images envoyées peuvent être de type fichier informatique.

Dans tous les cas, les images reçues sont dégradées et ne reconstituent en aucun cas l'effet de coprésence.

On pourra se reporter à l'état de la technique le plus proche que constitue le document WO- A - 94 16 517 (BELL COMMUNICATIONS RES) du 21 juillet 1994 qui décrit un système de téléconférence contrôlant la spatialisation des sons en fonction de la position du sujet actif, utilisant plusieurs micros directionnels du côté émetteur, transmettant un signal monophonique et un signal de "direction" et générant grâce à ces signaux du côté récepteur une image spatiale stéréophonique correspondant à l'image transmise, i.e. le son d'une source semble provenir de cette source telle qu'elle est affichée à l'écran.

Le document de SUSUMU ICHINOSE: "VISUAL TELEPHONE" du 1 mars 1993 , NTT REVIEW, VOL. 5, NR. 2, PAGE(S) 59 - 66, XP000364720, décrit un système de téléconférence à sensation réelle avec une représentation de la vidéo en "3D" et, bien entendu, une transmission correspondante du son. Aucun détail n'est donné quant à la spatialisation du dit son.

Dans le cas de l'audio on utilise des systèmes de codage ou compression de débit de type G722 ou G711 qui ne respectent pas la qualité originale du signal de parole tant en largeur de bande qu'en qualité de codage elle-même.

Le système de visioconférence selon l'invention a pour but d'offrir des réunions à distance avec le maximum de téléprésence en dépassant les limites des systèmes commercialisés aujourd'hui. Il permet d'obtenir une visualisation des participants distants sur écrans (échelle proche de 1), avec une grande perception des textures et des comportements et une correspondance des images visuelles et des images sonores grâce à une spatialisation sonore des participants distants, asservie aux conditions de prise de vue.

Il permet d'obtenir une présence continue des participants distants , même en situation multi-points. Le système permet en outre une minimisation des défauts de parallaxe (eye contact en anglais) en utilisant n caméras de prises de vue assez proches des images à filmer (logées par exemple dans des fenêtres de l'écran) comme cela est indiqué dans la suite. Il permet également une reproduction sonore haute fidélité.

La présente invention a plus particulièrement pour objet un système de visioconférence selon la revendication 1.

L'image des participants distants est à une échelle proche de 1 sur l'écran du studio, cette échelle dépend de la distance entre l'écran et la table où se trouvent les. participants. Cela conduit par exemple à un écran avec les dimensions typiques environ de 5x2m pour visualiser 4 salles distantes avec environ 4 personnes dans chaque salle.

Le système de visioconférence comporte un ou plusieurs ensembles de prise de vue (CA1), (CA2) et des systèmes de prise de son (microphones ou antennes acoustiques). Les données de prise de son sont associées à l'un ou à l'autre des ensembles de prise de vue selon que les signaux vidéo transmis proviennent de l'un ou de l'autre des ensembles (CA1), (CA2).

Plus précisément, l'association permet d'avoir une "superposition subjective", la source sonore étant proche (dans l'axe) de l'image associée.

Selon une autre caractéristique de l'invention les moyens de prise et de restitution de son comportent :
- une unité d'acquisition des signaux et de numérisation;
- une unité de restitution des signaux et de conversion numérique analogique;
- n microphones distribués devant les participants dudit site;
- p haut-parleurs distribués le long de l'écran, p étant proportionnel à la taille de l'écran;
- des moyens d'établissement de la correspondance entre un ou plusieurs microphones, le signal issu de ce ou ces microphone(s) et le ou les hauts-parleurs des sites distants destiné à restituer ces signaux;
- des moyens d'adaptation au réseau consistant en la réduction de débit;
- des moyens de contrôle de l'écho.

La spatialisation sonore permet de faire correspondre les images sonores et les images visuelles. Outre que cette disposition renforce fortement l'effet de téléprésence, elle permet d'établir plusieurs conversations parallèles entre les deux salles distantes; le suivi des conversations est simplifié par la possibilité de se focaliser sur la personne que l'on veut écouter, comme dans une réunion naturelle.

Les moyens d'établissement de la correspondance entre microphone, signal issu de ce microphone et haut-parleur des sites distants destiné à restituer ce signal sont réalisés par programmation de la configuration désirée. Cette programmation peut consister à mémoriser une ou plusieurs configurations prédéterminées.

Selon une autre caractéristique les moyens de prise de vue comportent pour chaque site q caméras ce nombre est de préférence supérieur ou égal à 2. Les caméras sont disposées devant les participants dudit site de maniéré à être réparties dans des zones distinctes d'affichage des différents participants distants sur l'écran ou à proximité de ces zones. De façon pratique, les caméras peuvent être réparties, dans la partie basse ou dans la partie haute, ou autour de l'écran.

Ainsi, chaque salle peut posséder plusieurs caméras de prise de vue qui cadrent les participants sous des angles différents. Les prises de vue qui sont transmises vers un site sont celles qui sont prises par la caméra qui se trouve à proximité de l'image projetée pour ce site. Cela permet de diminuer l'effet de parallaxe, de différencier les points de vue, et de reconstituer une localisation de chaque intervenant en fonction de sa disposition physique dans le site puis dans l'ensemble.

En situation de point à point où plusieurs images sont juxtaposées sur la largeur de l'écran, chaque image est construite avec une prise de vue partielle de la salle. Cela permet de mieux savoir qui regarde qui sur l'écran et donc de mieux suivre la dynamique de la réunion.

En pratique, les caméras sont placées sous les (ou dans le bas des) images écran projetées sur l'écran 10.

Pour une configuration à deux images concaténées (l'une à côté de l'autre), les caméras sont recentrées et se trouvent à une distance du centre de l'écran correspondant à environ un tiers de la largeur de l'image, c'est-à-dire un sixième de la largeur totale de l'écran. Ce recentrage minimise le problème de recouvrement aux bords des deux images prises par les deux caméras.

Les sites sont reliés par réseau à haut débit soit en point à point, soit en multi-points, soit à travers une unité centrale EVM (pont de visioconférence).

D'autres particularités et avantages de l'invention apparaîtront à la lecture de la description qui est faite ci-après et qui est donnée à titre d'exemple illustratif et non limitatif et en regard des dessins sur lesquels :
- les figures 1 et 2, illustrent de façon schématique le problème de la coprésence que l'invention résout,
- la figure 3, illustre le schéma de principe de l'invention,
- la figure 4, illustre le schéma de réalisation pratique des équipements dans un studio,
- la figure 5, correspond à un schéma de réalisation particulière correspondant à une liaison entre 3 studios,
- la figure 6, correspond à un schéma de réalisation particulière correspondant à un liaison entre 2 studios,
- la figure 7 à 9, illustrent un exemple de différentes "images écrans" formant le mur d'image sur le grand écran,
- les figures 10 à 13, correspondent à différents modes de liaison entre les équipements studios ou terminaux visiophoniques selon l'invention dans les configurations réseaux différentes.

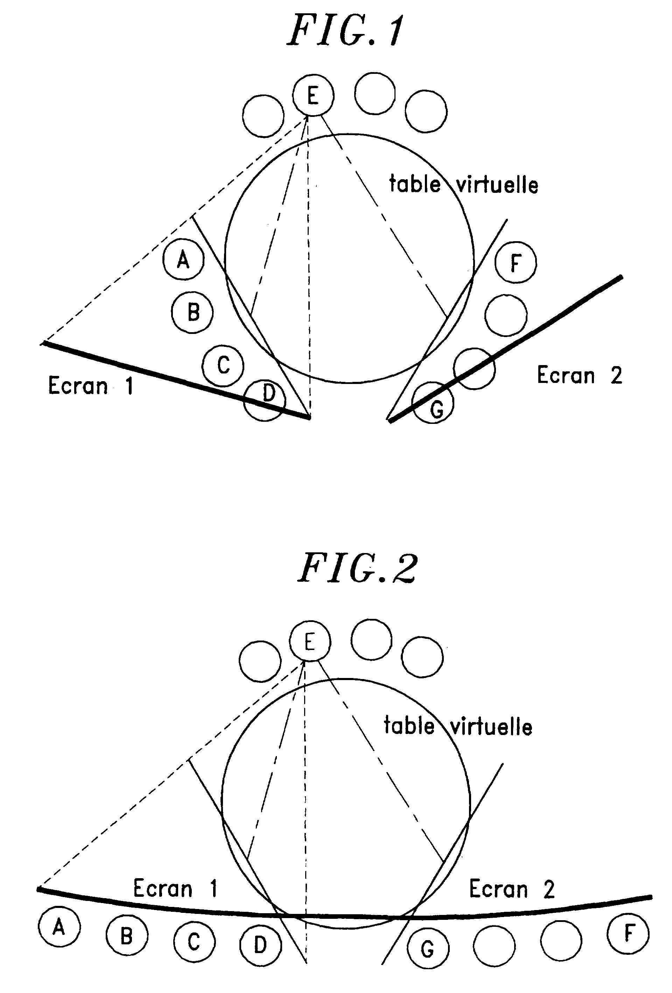

Afin de décrire une approche de l'effet de coprésence, la figure 1 illustre la réunion suivant une visualisation se rapprochant de la réalité.

Considérons 12 personnes installées autour d'une table ronde virtuelle. L'un des personnages voit 4 autres personnes adjacentes du groupe à travers une lucarne et en développant la surface on peut considérer qu'il voit ces 4 personnes sur un écran plan ou quasi plan. Ainsi verra-t-il les 8 autres personnes regroupées en 4 dans 2 studios différents sur 2 écrans pratiquement en situation plane. En général, la table virtuelle n'est pas ronde mais est disposée en long avec les groupes installés de part et d'autre. Ainsi, le personnage E verra A à sa gauche et F à sa droite avec continuité d'adjacence entre tous les individus.

La figure 2 illustre le ou les écrans qui sont légèrement courbes pour reproduire une situation d'immersion.

Cet environnement permet entre autre de restituer les effets de regards échangés entre les participants en reproduisant une approximation du jeu des yeux qui se tournent et s'observent. Par exemple, A peut observer E et tout autres personnes verra A regardant F avec une approximation des angles de visée subjective.

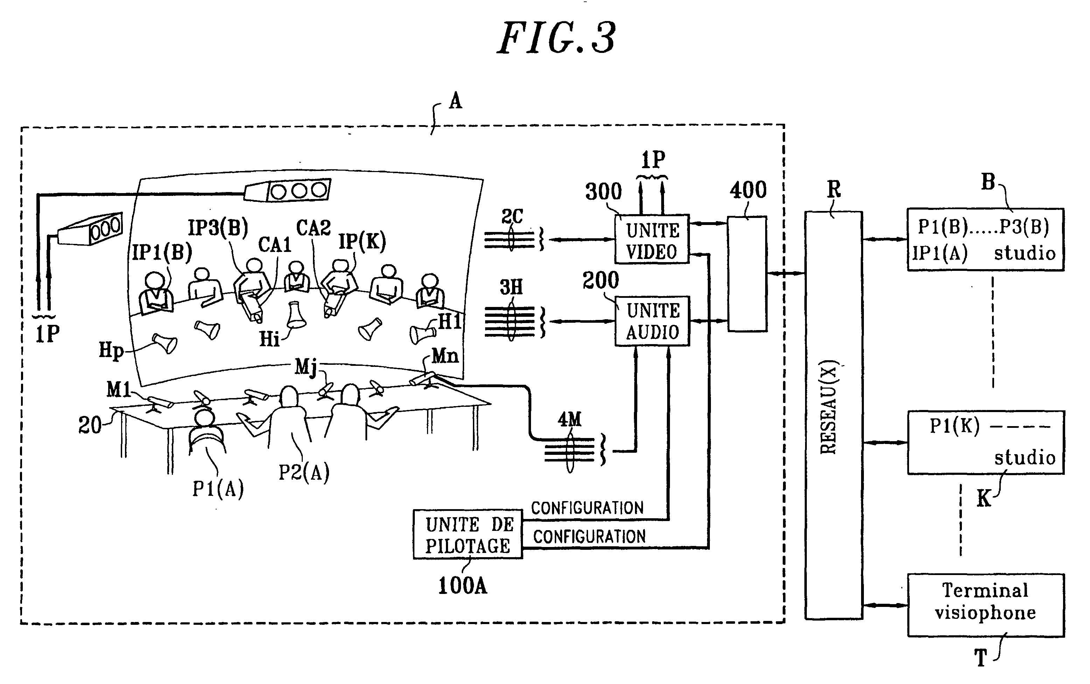

Le schéma de la figure 3 est un schéma de principe illustrant un système de téléconférence selon l'invention.

Bien entendu, d'autres choix peuvent être faits en ce qui concerne la position des participants (assis ou debout, autour d'une table ou non), en ce qui concerne la position de la caméra ou des caméras et en ce qui concerne la position des enceintes acoustiques (hauts-parleurs) dès l'instant où ces positions permettent d'obtenir une répartition spatiale sonore et un mur d'image simulant une immersion totale de tous les participants.

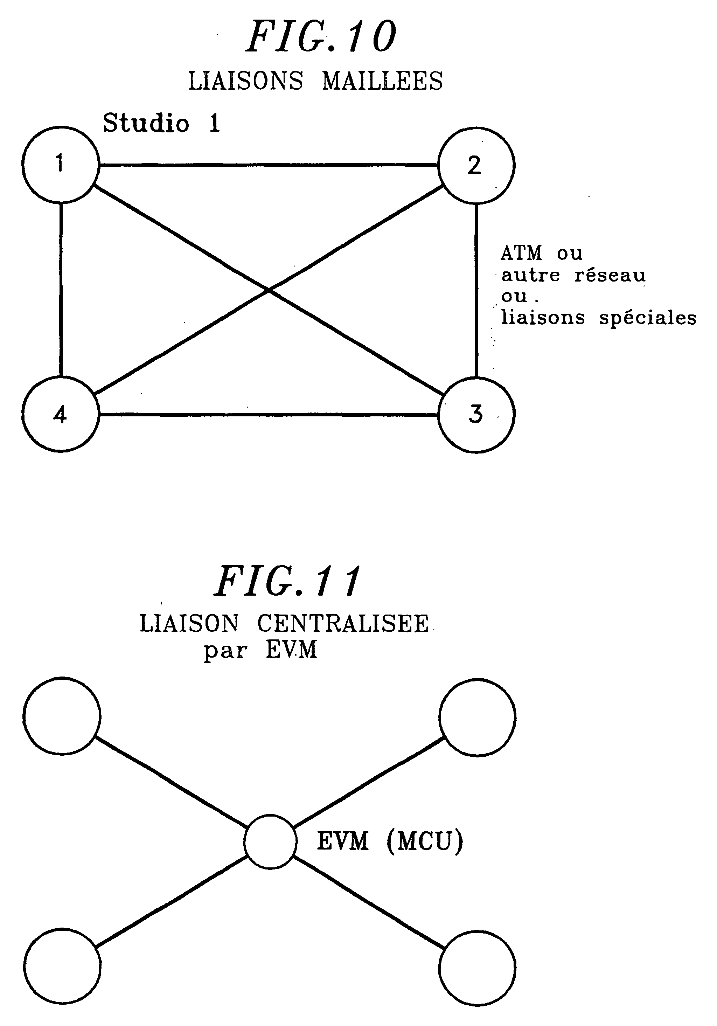

Un site A est relié à d'autres sites B ... K par un réseau à haut débit. Les différentes possibilités de liaison pour ces sites seront détaillées par la suite avec les figures 10 à 13. On pourra par exemple utiliser le réseau RNIS (à intégration de service) en regroupant plusieurs accès SO, on peut aussi utiliser des autoroutes de l'information ou le réseau Internet ou des accès à HDSL. De tels réseaux ne sont pas des obstacles pour des signaux son analogiques de bande passante supérieure à 7kHz dès l'instant où l'on met en oeuvre des systèmes de compression de débit qui préservent la qualité originale. Ceci procure une haute qualité sonore équivalente à celle d'un disque numérique compact (CD).

Le réseau de transmission utilisé pourra être le réseau à mode de transfert asynchrone (ATM) ou tout autre réseau de débit élevé de type numérique ou même analogique. Toutes les images pourront être transmises vers les différents sites à des débits suffisamment élevés sans nécessité d'augmenter le facteur de compression lors du codage.

A titre d'exemple, les images codées sont transmises entre 384kbit/s sur Numéris et 2Mbit/s selon le type de réseau.

La visioconférence est pilotée ou télépilotée par des unités 100A, 100K qui dialoguent à travers le (ou les) réseau(x) R pour notamment s'accorder sur la correspondance établie entre participant, image sonore et image visuelle. Autrement dit, les unités de pilotage transmettent soit une description de la configuration avec les signaux transmis si la configuration n'a pas été déjà prédéfinie, soit le mode de configuration choisi parmi plusieurs configurations déjà définies pour tous les sites. Elles sont aptes à gérer tous les équipements du studio selon la configuration désirée. Parmi les configurations possibles pour une conférence, on peut avoir une liaison point à point ou des liaisons multi-points entre 3 ou 4, ou 5 et plus, sites.

De façon pratique, la configuration consiste à décrire le lien entre un participant d'un site P1(A), le ou les systèmes de prise de son M1 (microphones ou antennes acoustiques) qui captent son discours, la caméra qui le filme CA1 de manière à ce l'image IP1(A) sur le site B soit en correspondance avec le ou les haut(s)-parleur(s) H1 qui restitue(nt) le son issu du ou des microphones M1.

Pour cela, un site A comporte n microphones, p hauts-parleurs, q caméras. Pour un site donné, le nombre de hauts-parleurs est proportionnel à la taille de l'écran (soit à la largeur, soit à la surface de cet écran).

Pour des participants assis autour d'une table, le grand écran 10 est disposé devant la table de conférence d'un site considéré et les images écran (de chaque site) sont projetées sur cet écran de manière à ce que les participants distants soient par exemple au même niveau que les participants du site de façon à reconstituer une table virtuelle.

Lorsque le participant P1(A) s'adresse au participant P1(B), ce sont les prises de vue de la caméra CA1 du site A qui sont transmises vers les autres sites B à K. De même, ce sont les prises de vue de la caméra CA1 du site B qui sont transmises vers les sites A, C à K. Si aucun participant ne prend la parole sur les autres sites, la caméra qui effectue les prises de vue sur ces sites est indifférente, mais les images de tous les participants sont quand même transmises.

Les commandes des prises de vue par les caméras adéquates sont pilotées par les unités de pilotage 100A-100K présentes sur les sites ou télépilotées à partir d'un site de surveillance.

L'asservissement entre la prise de son effectuée et la caméra qui doit réaliser la prise de vue, est obtenu par un programme de commande à la portée de l'homme de métier. Ce programme est mis en oeuvre par les unités 100A à 100K pour obtenir des images donnant l'impression lorsqu'elles sont projetées sur les écrans que les personnes intéressées se regardent vraiment.

De façon pratique, l'usage de seulement deux caméras permet d'obtenir cet effet.

Les images transmises par le réseau sont reçues à chaque site et traitées par les unités vidéo 300 pour être projetées de manière juxtaposée et/ou superposée sur l'écran. Toutes les images reçues sont visualisées sur l'écran 10 de chaque site, l'écran formant un mur d'images.

Dans le cas particulier d'un système point à point les images projetées sur chaque écran correspondent à une seule salle. Cette situation permet d'améliorer la qualité de l'image. Pour ce faire il est proposé dans ce cas de transmettre les deux images chacune obtenue par une caméra. Chaque caméra réalise des prises de vue partielle de la salle. En pratique, une caméra filme une moitié de la scène, l'autre caméra filme l'autre moitié.

La juxtaposition des images est pilotée par les unités de traitement 100A, 100B qui commandent les unités de traitement vidéo pour former à l'écran une seule image à partir des signaux issus des deux caméras. La concaténation d'image est un traitement classique en soi.

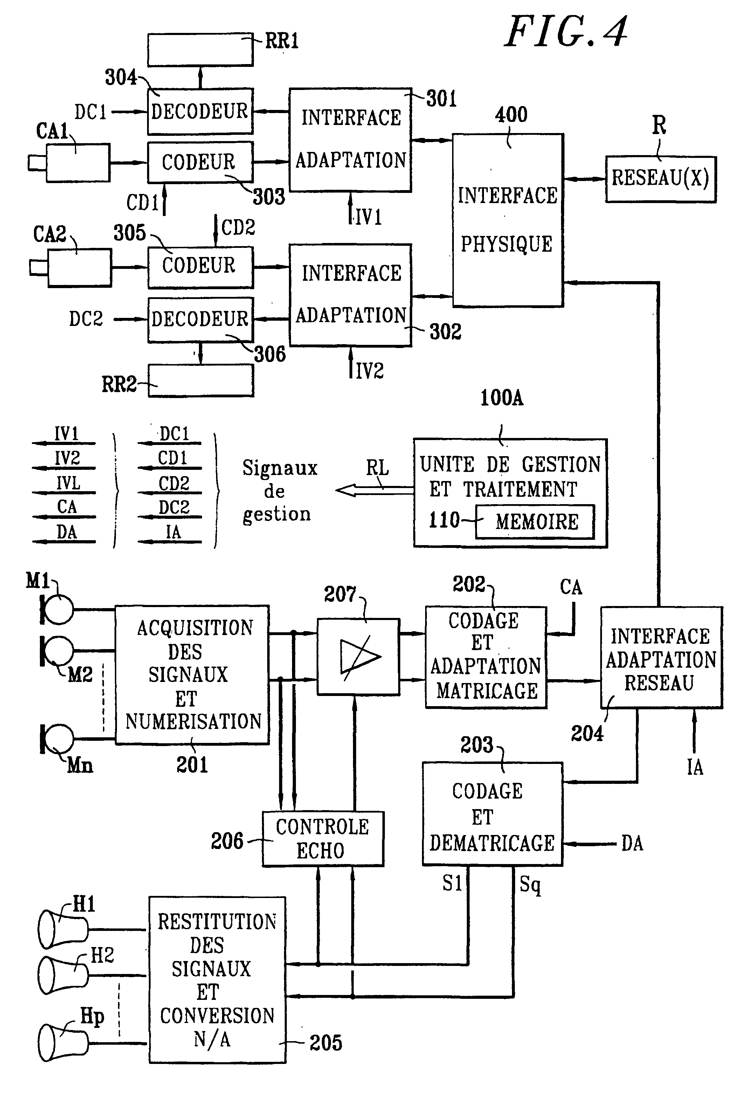

Sur la figure 4, on a représenté de façon plus détaillée les unités de traitement et de pilotage présentes dans le système. Il s'agit là encore d'un exemple correspondant au cas où l'on a deux caméras par studio.

Pour la partie vidéo :

La première caméra CA1 est reliée à un codeur vidéo 303 et un ensemble de décodage vidéo 304 est relié à un premier projecteur PR1. L'ensemble de décodage est formé d'un ou plusieurs décodeurs pour que chaque décodeur décode les signaux vidéo provenant d'un site. Dans la suite de la description, on parlera pour simplifier de décodeur 304 sachant qu'il peut s'agir d'un ensemble de décodeurs.

Le codeur et le décodeur sont reliés à une interface 301 d'adaptation et de transmission des signaux vidéo sur le réseau R. A titre d'exemple, cette interface sera une interface AAL1 (Adaptation Layer) dans le cas d'un transmission sur réseau ATM.

Cette interface est reliée à une interface support physique 400.

L'unité de pilotage 100A envoie, par exemple à travers un réseau local RL, les signaux de pilotage CD1, DC1, IV1 respectivement pour le codeur, le décodeur et l'interface d'adaptation 301 selon la configuration de la visioconférence.

De la même façon, la deuxième caméra CA2 est reliée à un codeur 305 qui est lui-même relié à une interface 302 d'adaptation à la transmission sur le réseau. Un décodeur 306 est relié au deuxième projecteur PR2 et à l'interface 302. L'interface 302 est reliée à l'interface support physique 400.

L'unité de pilotage envoie les signaux de pilotage CD2, DC2, et IV2 respectivement au codeur, décodeur et interface d'adaptation selon la configuration.

Un codeur vidéo peut être relié fonctionnellement à plusieurs décodeurs selon des techniques hors de la portée de l'invention.

On pourrait avoir une troisième caméra sur un site qui serait alors reliée à l'un des codeurs 303 ou 305 et transmettre de cette façon des prises de vue d'une personne que l'on désire favoriser. Les prises de vue de cette caméra seraient codées par le codeur auquel elle est reliée et transmises à tous les autres sites. Il faudrait alors prévoir sur les autres sites un décodeur supplémentaire dans l'ensemble décodeur 303 ou 306 de ces sites pour traiter le signal vidéo issu de cette caméra et visualiser sur l'écran 10 des sites, les images d'écran relatives à ces prises de vue.

Les projecteurs sont soit des projecteurs vidéo, soit des rétroprojecteurs à cristaux liquides. La projection peut être directe si l'on utilise un écran à plasma.

Pour la partie audio :

Les n microphones sont reliés à une unité d'acquisition des signaux 201 réalisant la numérisation des signaux. Les sorties de cette unité 201 sont appliquées aux entrées d'une unité d'atténuation 207 pour le contrôle de l'écho. Les sorties de l'unité d'atténuation sont appliquées aux entrées d'un codeur réducteur de débit pour le signal audio 202 piloté par l'unité 100A. Le codeur 202 effectue également le matriçage des signaux microphoniques pour s'adapter au nombre de canaux disponible sur le réseau pour le transport audio. Pour cela, le codeur reçoit le signal de gestion de la configuration CA. Le codeur adaptateur audio 202 est relié à une interface 204 d'adaptation à la transmission sur le réseau R qui sera une interface AAL5 pour le réseau ATM. Cette interface est reliée à l'interface support physique 400.

L'interface 204 est apte à émettre les signaux audio codés sur le réseau et à recevoir les signaux audio codés émis par les autres sites. Les signaux reçus sont traités par l'interface 204 et appliqués à une unité de décodage et de dématriçage 203 des signaux audio.

Les signaux délivrés par l'unité de décodage et de matriçage 203 sont appliqués au(x) haut(s)-parleur(s) désiré(s) au moyen d'une unité 205 de restitution et de conversion numérique analogiques des signaux audio. Cette unité 205 peut ainsi envoyer vers les hauts-parleurs qui conviennent les signaux reçus requis.

Dans le cas où la configuration est prévue et mémorisée dans une mémoire 110 de l'unité de pilotage, l'unité 100A aura dans la table mémorisée une information indiquant que la sortie S1 du décodeur délivre le signal qui a été capté soit par le micro M1, soit par un ensemble de microphones dont M1 fait partie d'un site B et que, en conséquence, cette sortie doit être aiguillée vers le haut-parleur Hn ou un ensemble de hauts-parleurs dont H1 fait partie pour être à proximité de l'image du participant qui a parlé.

Les systèmes d'acquisition (microphone et unité 205) sont choisis de manière à respecter la bande passante du signal de parole et de manière à fonctionner pour des bandes de fréquences °à 7kHz (ce qui constitue la limite basse du système en terme de qualité). Le système de codage est également choisi pour respecter cette qualité originale et on choisira par exemple des algorithmes de réduction de débit décrit par les normes MPEG1 ou MPEG2. Les systèmes d'acquisition sont choisis aussi de manière à procurer un bon rapport signal/bruit.

A titre d'exemple de configuration possible dans le cas de deux salles en point à point on aura 6 canaux pour le son soit un par exemple pour chaque microphone. Dans le cas de 3 salles on aura deux fois 3 canaux pour le son sur chaque site. Pour le site A, 3 canaux permettront la liaison audio entre A et B et les trois autres permettront la liaison audio entre A et C (idem. pour B, et pour C).

L'image et le son sont transmis avec un décalage dans le temps le plus faible possible (de l'ordre de la centaine de milliseconde) ce qui, combiné avec la qualité et la taille de l'image vidéo, peut par exemple permettre à un sourd de lire sur les lèvres des correspondants distants.

L'équipement audio comporte en outre un circuit de contrôle d'écho 206 agissant par variation du gain sur les signaux microphoniques au moyen de l'unité d'atténuation variable 207 selon des procédés, classiques en soi. Ce circuit est relié aux sorties de l'unité 201 et aux entrées de l'unité 205.

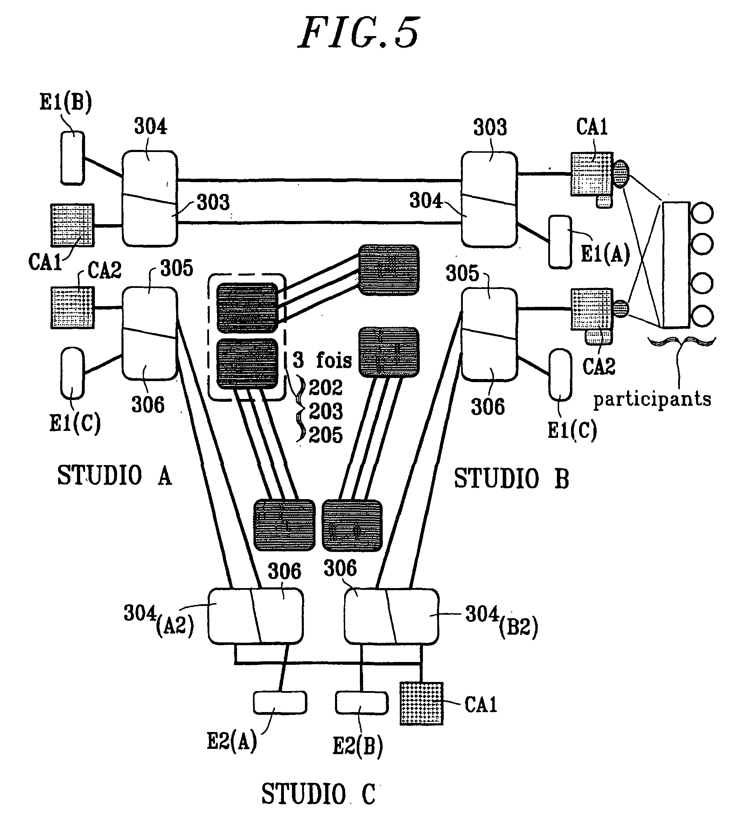

Le schéma de la figure 5 illustre un cas particulier de configuration possible. Il s'agit d'une configuration vidéo entre trois sites A, B, C.

Pour simplifier cette figure on a représenté les liens directs réalisés selon cette configuration entre les différents sites en faisant abstraction du réseau de transmission.

Cette configuration est décrite à partir de 3 sites A, B, C.

Les sites A et B ont chacun deux caméras CA1 et CA2 qui permettent d'avoir des vues sous des angles différents d'un même site.

Selon cette configuration on réalise des liaisons point à point pour les codeurs et les décodeurs.

La caméra CA1 est reliée au codeur 303 du site A, ce codeur est relié au décodeur 304 qui est relié au projecteur qui permet d'avoir l'image d'écran E1(A) (image provenant de la caméra CA1 du site A).

Le codeur 303 du site B est relié à la caméra CA1 du site B. le signal fourni par le décodeur est décodé par le décodeur 304 du site A pour fournir l'image d'écran E1(B) (image provenant de la caméra CA1 du site B).

Dans le studio C on a placé une seule caméra portant la référence CA1. Cette caméra est reliée aux deux codeurs 304(A2) et 304(B2). Le codeur 304(A2) est relié au décodeur 306 du site A associé à l'image d'écran E1(C) et le codeur 304(B2) est relié au décodeur 306 du site B associé à l'image d'écran E1(C).

En revanche les décodeurs 306 du site C sont reliés l'un au codeur 305 du signal de la caméra CA2 du site A, l'autre au codeur 305 du signal de la caméra CA2 du site B pour afficher respectivement sur le site C les images d'écran Site A, c'est-à-dire E2(A) et site B, c'est-à-dire E2(B).

Les unités de traitement audio sont également doublées d'après cette configuration de manière à mettre en liaison une unité audio 202, 203, 205 avec chaque site.

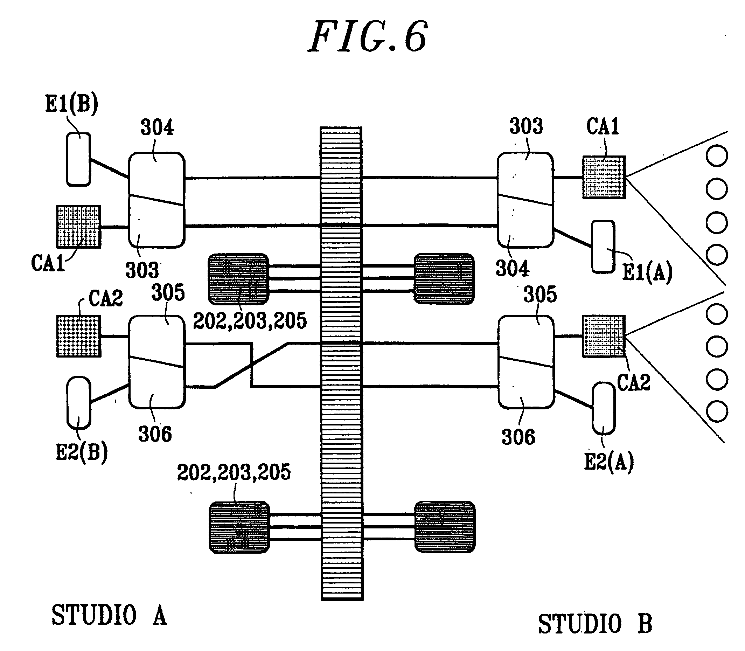

La figure 6 illustre une liaison point à point entre un site A et un site B. Dans ce cas chaque caméra CA1, CA2 effectue une prise de vue partielle du site.

Dans le cas de la transmission de 6 flux audio (6 microphones) on utilisera deux codeurs-décodeurs à 3 voies pour chaque site.

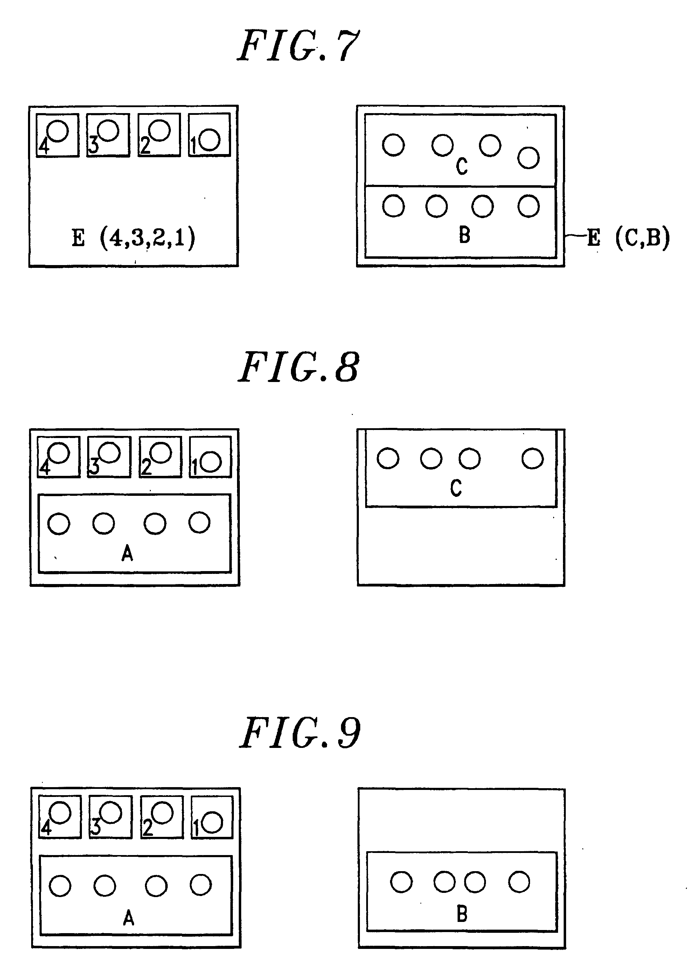

Les figures 7 à 9 illustrent respectivement les images d'écran projetées sur le site A, B et C. Sur le site A, figure 7, l'image d'écran E(4,3,2,1) permet de visualiser des images provenant de terminaux individuels et l'image d'écran E(C,B) permet de visualiser les images superposées des sites C et B.

La figure 8 correspond à la visualisation sur le site B et la figure 9 à la visualisation sur le site C.

Les figures 10 à 13 illustrent des exemples de liaisons possibles entre les sites.

La figure 10 correspond à 4 studios reliés par un réseau ATM ou liaison spécialisées.

La figure 11 correspond à des liaisons réalisées à travers une unité centralisée EVM (MCU) (pont de visioconférence).

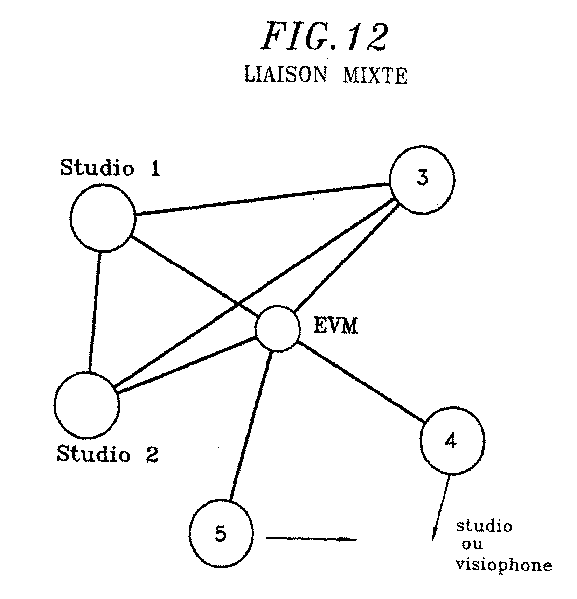

La figure 12 correspond à des liaisons mixtes réseau et un équipement EVM (MCU), c'est-à-dire un pont de visioconférence du commerce comprenant un traitement de suppression des signaux audio des studios 1, 2 et 3 car les sites qui ont des liaisons directes et une liaison à travers cet équipement seraient gênés par la superposition avec décalage temporel des signaux qui proviennent des liaisons réseaux directes et des liaisons EVM.

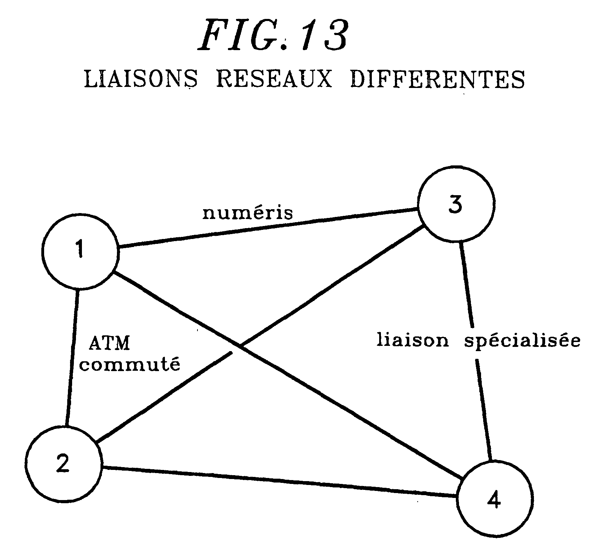

La figure 13 illustre le cas de liaison à travers des réseaux de types différents Numéris, ATM, liaison spécialisée.

## Revendications

1. Système de visioconférence entre participants localisés sur N, N>2 sites distincts, comprenant sur chaque site un écran de visualisation, des moyens de prise de vue et de restitution des images , des moyens de prise de son et de restitution du son, dans lequel :
- l'écran de visualisation est un grand écran (10) du type écran de projection ou de rétroprojection ou de type à vision directe, formé par un ou plusieurs systèmes de visualisation formant un mur d'images pour visualiser simultanément tous les participants distants dans un espace reconstitué sur le mur d'images que forme cet écran (10),
- les moyens de prise du son et de restitution comprennent pour chaque site donné des moyens de répartition spatiale du son (100A, 100K, Hi, Mj) pour établir une correspondance entre le son généré par chaque participant distant et son image visualisée sur l'écran du site considéré, **caractérisé en ce que** :
- un site considéré reçoit les images et les signaux audio émis par les autres sites et les restitue en fonction de la correspondance établie, la vision et l'écoute des autres sites et des locuteurs étant simultanée et se faisant par des échanges de voix entre plusieurs à la fois sans interruption ou gêne des autres participants, chaque site comprenant pour cela :
- des moyens de prise et de restitution de son, comportant:
- une unité d'acquisition des signaux- et de numérisation (201);
- une unité de restitution des signaux et de conversion numérique analogique (205);
- n microphones (M1, ..., Mn) distribués devant les participants dudit site;
- p haut-parleurs (H1, ..., HP) distribués le long de l'écran, p étant proportionnel à la taille de l'écran;
- des moyens d'adaptation au réseau consistant en la réduction de débit;
- des moyens de contrôle de l'écho; et
- des moyens d'établissement de la correspondance entre microphone, signal issu de ce microphone et haut parleur destiné à restituer ce signal, comportant des moyens de mémorisation (110) d'une ou de plusieurs configurations établissant les correspondances désirées.

2. Système de visioconférence selon la revendication 1, **caractérisé en ce que** les dimensions de l'écran (10) constituant le mur d'images sont choisies de manière à permettre un affichage des images de tous les sites avec une représentation des participants proche de l'échelle un.

3. Système de visioconférence selon la revendication 1, **caractérisé en ce que** les moyens de prise de vues comportent un premier (CA1) et un deuxième (CA2) ensemble de prise de vues et **en ce que** les données de prise de son sont associées à l'un ou à l'autre desdits ensembles de prise de vue selon que les signaux vidéo transmis proviennent de l'un ou de l'autre desdits ensembles (CA1), (CA2).

4. Système de visioconférence selon la revendication 1, **caractérisé en ce que** les moyens de prise de son comportent plusieurs microphones, des moyens d'acquisition des signaux audio (201), des moyens de codage et de matriçage (205) desdits signaux.

5. Système de visioconférence selon la revendication 1, **caractérisé en ce que** les moyens de restitution du son comportent des moyens de décodage et dématriçage des signaux audio (203), des moyens de restitution des signaux audio (205) et plusieurs haut-parleurs.

6. Système de visioconférence selon l'une quelconque des revendications précédentes, **caractérisé en ce que** chaque ensemble de prise de vue comporte pour chaque site q caméras disposées devant les participants dudit site de manière à ce que chaque caméra se trouve dans des zones distinctes d'affichage sur l'écran des différents groupes de participants distants.

7. Système de visioconférence selon l'une quelconque des revendications précédentes , dans lequel la visioconférence est réalisée entre N sites, **caractérisé en ce que** le nombre q de caméras par site est supérieur ou égal à 2 pour reconstituer les effets de perspective de prise de vue.

8. Système de visioconférence selon l'une quelconque des revendications 1 à 6, dans lequel la visioconférence est réalisée entre uniquement deux sites distants, **caractérisé en ce qu'**une caméra (CA1) réalise une prïse de vue partielle du site local comprenant un premier ensemble de participants, **en ce que** l'autre caméra (CA2) réalise une prise de vue partielle du site local comprenant un deuxième ensemble de participants, et **en ce que** les deux images sont juxtaposées pour permettre la visualisation de l'ensemble des participants.

9. Système de visioconférence selon l'une quelconque des revendications 1 à 8 dans lequel plusieurs caméras sont utilisées pour les prises de vues, **caractérisé en ce que** lesdites caméras (CA1, CA2) sont placées sous les images projetées.

10. Système de visioconférence selon l'une quelconque des revendications précédentes, **caractérisé** en qu'il comporte en outre plusieurs projecteurs vidéo ou rétroprojecteurs (PR1, PR2) du type tubes cathodiques ou à cristaux liquides pour obtenir une restitution des images à l'échelle proche de 1.

11. Système de visioconférence selon l'une quelconque des revendications précédentes, **caractérisé en ce qu'**il comporte des moyens de traitement d'image pour chaque site aptes à obtenir une juxtaposition ou superposition des images (301, 304) reçues des sites distants pour permettre l'affichage de toutes les images sur l'écran (10).

12. Système de visioconférence selon l'une quelconque des revendications précédentes dans lequel les sites sont reliés directement par réseau de transmission (R) haut débit, ou indirectement à travers un pont de visioconférence ou par réseau et pont de visioconférence.

13. Système de visioconférence selon l'une quelconque des revendications précédentes, **caractérisé en ce que** les moyens de traitement comportent :
- une unité de traitement et de gestion de type micro-ordinateur ou station de travail (100A, ..., 100K),
- des codeurs-décodeurs vidéo (303-306) et des codeurs-décodeurs audio pilotés par l'unité de traitement et,
- des interfaces d'adaptation à la transmission (301, 302, 204) pour ledit réseau.

14. Système de visioconférence selon la revendication 13, **caractérisé en ce que** le réseau est un réseau de transmission en mode de transfert asynchrone de type ATM, **en ce que** les interfaces de transmission pour les signaux audiovisuel sont des interfaces de type AAL1 et **en ce que** les interfaces de transmission pour les signaux de pilotage de la visioconférence entre les unités de traitement sont des interfaces de type AAL5.

## Patentansprüche

1. Videokonferenzsystem zwischen Teilnehmern, die sich an N verschiedenen Orten befinden, wobei N>2 und jeder Ort einen Bildschirm, Bildaufnahme- und Wiedergabeeinrichtungen, Tonaufnahme- und Wiedergabeeinrichtungen umfasst, bei denen:
- der Bildschirm ein großer Schirm (10) des Typs Projektions- oder Retroprojektionsschirm oder des Direktsichttyps ist, gebildet durch ein oder mehrere Anzeigesysteme, die eine Bildwand bilden, um simultan alle entfernten Teilnehmer in einem Raum sichtbar zu machen, wiedergegeben auf der Bildwand, die diesen Schirm (10) bildet,
- die Tonaufnahme- und Wiedergabeeinrichtungen für jeden gegebenen Ort Ton-Raumverteilungseinrichtungen (100A, 100K, Hi, Mj) umfassen, um eine Übereinstimmung herzustellen zwischen dem von jedem entfernten Teilnehmer erzeugten Ton und seinem auf dem Schirm sichtbaren Bild,
**dadurch gekennzeichnet,**
- **dass** ein in Betracht gezogener Ort die von den anderen Orten ausgesendeten Bilder und Tonsignale empfängt und sie in Abhängigkeit von der hergestellten Übereinstimmung wiedergibt, wobei das Sehen und Hören der anderen Orte und der Sprecher simultan ist und durch Stimmenaustausche erfolgt, gleichzeitig zwischen mehreren Teilnehmern, ohne Unterbrechung oder Störung der anderen, wobei jeder Ort dafür umfasst:
- Tonaufnahme- und -wiedergabeeinrichtungen, enthaltend:
- eine Einheit zur Erfassung und Digitalisierung der Signale (201),
- eine Einheit zur Wiedergabe der Signale und zur Digital-Analog-Umsetzung (205);
- n Mikrophone (M1, ..., Mn), verteilt vor den Teilnehmern des genannten Orts;
- p Lautsprecher (H1, ..., HP), verteilt längs des Schirms, wobei p zur Größe des Schirms proportional ist;
- Einrichtungen zur Anpassung an das Netz, darin bestehend, die Datenrate zu reduzieren;
- Echo-Kontroileinrichtungen; und
- Einrichtungen zur Herstellung der Übereinstimmung zwischen dem Mikrophon, dem aus diesem Mikrophon stammenden Signal und dem dieses Signal wiedergebenden Lautsprecher, Speichereinrichtungen (110), eine oder mehrere Konfigurationen umfassend, die die erwünschten Übereinstimmungen herstellen.

2. Videokonferenzsystem nach Anspruch 1, **dadurch gekennzeichnet, dass** die Abmessungen des die Bildwand bildenden Schirms (10) so gewählt werden, dass sie eine Anzeige der Bilder aller Orte mit einer Darstellung der Teilnehmer ungefähr im Maßstab 1:1 ermöglicht.

3. Videokonferenzsystem nach Anspruch 1, **dadurch gekennzeichnet, dass** die Bildaufnahmeeinrichtungen eine erste (CA1) und eine zweite (CA2) Bildaufnahmeeinheit umfassen, und dass die Tonaufnahmedaten der einen oder der anderen der genannten Bildaufnahmeeinheiten zugeordnet werden, je nach dem, ob die übertragenen Videosignale von der einen oder der anderen der genannten Einheiten (CA1), (CA2) stammen.

4. Videokonferenzsystem nach Anspruch 1, **dadurch gekennzeichnet, dass** die Tonaufnahmeeinrichtungen mehrere Mikrophone, Erfassungseinrichtungen der Tonsignale sowie Codier- und Matriziereinrichtungen (205) der genannten Signale umfassen.

5. Videokonferenzsystem nach Anspruch 1, **dadurch gekennzeichnet, dass** die Tonwiedergabeeinrichtungen Decodiereinrichtungen und Dematriziereinrichtungen (203) der Tonsignale (203), Wiedergabeeinrichtungen der Tonsignale (205) und mehrere Lautsprecher umfassen.

6. Videokonferenzsystem nach einem der vorangehenden Ansprüche, **dadurch gekennzeichnet, dass** jede Bildaufnahmeeinheit für jeden Ort q Kameras umfasst, die vor den Teilnehmern des genannten Orts so aufgebaut sind, dass jede Kamera sich auf dem Bildschirm der verschiedenen Gruppen entfernter Teilnehmer in unterschiedlichen Anzeigezonen befindet.

7. Videokonferenzsystem nach einem der vorangehenden Ansprüche, **dadurch gekennzeichnet, dass** die Zahl von q Kameras pro Ort höher oder gleich 2 ist, um die perspektivischen Effekte der Bildaufnahme wiederzugeben.

8. Videokonferenzsystem nach einem der Ansprüche 1 bis 6, bei dem die Videokonferenz nur zwischen zwei voneinander entfernten Orten stattfindet, **dadurch gekennzeichnet, dass** eine Kamera (CA1) eine partielle Bildaufnahme der lokalen Örtlichkeit mit einer ersten Gruppe von Teilnehmern liefert, und dass die andere Kamera (CA2) eine partielle Bildaufnahme der lokalen Örtlichkeit mit der zweiten Gruppe von Teilnehmern liefert, und dass die beiden Bilder nebeneinander gestellt werden, um zu ermöglichen, alle Teilnehmer sichtbar zu machen.

9. Videokonferenzsystem nach einem der Ansprüche 1 bis 8, bei dem für die Bildaufnahmen mehrere Kameras benutzt werden, **dadurch gekennzeichnet, dass** die genannten Kameras (CA1, CA2) unter den projizierten Bildern platziert sind.

10. Videokonferenzsystem nach einem der vorangehenden Ansprüche, **dadurch gekennzeichnet, dass** es außerdem mehrere Videoprojektoren oder Retroprojektoren (PR1, PR2) des Katodenstrahlröhren- oder Flüssigkristalltyps umfasst, um eine Wiedergabe der Bilder ungefähr im Maßstab 1:1 zu erhalten.

11. Videokonferenzsystem nach einem der vorangehenden Ansprüche, **dadurch gekennzeichnet, dass** es an jedem Ort über Bildverarbeitungseinrichtungen verfügt, die fähig sind, eine Nebeneinanderstellung oder Überlagerung der von den entfernten Orten empfangenen Bilder (301, 304) herzustellen, um zu ermöglichen, alle Bilder auf dem Schirm (10) darzustellen.

12. Videokonferenzsystem nach einem der vorangehenden Ansprüche, bei dem die Orte direkt über ein Hochleistungs-Übertragungsnetzwerk (R) oder indirekt durch eine Videokonferenzbrücke oder durch Videokonferenznetzwerk und -brücke verbunden sind.

13. Videokonferenzsystem nach einem der vorangehenden Ansprüche, **dadurch gekennzeichnet, dass** die Verarbeitungseinrichtungen umfassen:
- eine Verarbeitungs- und Verwaltungseinheit des Typs Mikrocomputer oder Arbeitsstation (100A, ..., 100K),
- Video-Coder/Decoder (303-306) und Audio-Coder/Decoder, gesteuert durch die Verarbeitungseinheit, und
- Schnittstellen (301, 302, 204) zur Anpassung an die Übertragung für das genannte Netzwerk.

14. Videokonferenz nach Anspruch 13, **dadurch gekennzeichnet, dass** das Netzwerk ein Asynchronübertragungsnetzwerk des Typs ATM ist, dass die Übertragungsschnittstellen für die audiovisuellen Signale Schnittstellen des Typs AAL1 sind, und dass die Übertragungsschnittstellen für die Steuersignale der Videokonferenz zwischen den Verarbeitungseinheiten Schnittstellen des Typs AAL5 sind.

## Claims

1. System for video conferences between participants located at N, N>2 separate sites, comprising on each site a display screen, means for recording and for reproducing the pictures, means for recording sound and for reproducing the sound, in which:
- the display screen is a large screen (10) of the projection screen type or overhead projection screen type or direct viewing type, formed by one or more display systems forming a wall of pictures to simultaneously display all the distant participants in a space reconstituted on the wall of pictures formed by this screen (10);
- the means for recording the sound and reproduction comprise for each given site means for spatial distribution of the sound (100A, 100K, Hi, Mj) to establish a correspondence between the sound generated by each distant participant and his picture displayed on the screen of the site concerned, **characterised in that**:
- a site concerned receives the pictures and the audio signals transmitted by the other sites and reproduces them as a function of the established correspondence, the viewing and hearing of the other sites and the speakers being simultaneous and being effected through voice exchanges between a plurality simultaneously without interrupting or disturbing the other participants, each site comprising for this:
- means for recording and reproducing sound comprising:
- a unit for acquisition of the signals and digitisation (201) ;
- a unit for reproducing the signals and analogue digital conversion (205);
- n microphones (M1, ..., Mn) distributed in front of the participants of said site;
- p loudspeakers (H1, ..., HP) distributed along the screen, p being proportional to the size of the screen;
- means for adaptation to the network consisting in reduction of rate;
- means for controlling the echo, and
- means for establishing the correspondence between the microphone, the signal originating from this microphone and the loudspeaker designed to reproduce this signal, comprising storage means (110) for one or more configurations establishing the desired correspondence.

2. Video conference system according to claim 1, **characterised in that** the dimensions of the screen (10) constituting the wall of pictures are chosen so that the pictures of all the sites can be displayed showing the participants to a scale close to 1:1.

3. video conference system according to claim 1, **characterised in that** the means for recording pictures comprise a first unit for recording pictures (CA1) and a second unit for recording pictures (CA2) and in chat the sound recording data is associated with one or other of said units for recording pictures according to whether the video signals transmitted come from one or other of said units (CA1), (CA2).

4. video conference system according to claim 1, **characterised in that** the means for recording sound comprise a plurality of microphones, means for acquiring the audio signals (201), means for coding and matrixing said signals (205).

5. Video conference system according to claim 1, **characterised in that** the means for reproducing the sound comprise means for decoding and dematrixing the audio signals (203), means for reproducing the audio signals (205) and a plurality of loudspeakers.

6. Video conference system according to any one of the preceding claims, **characterised in that** each unit for recording pictures comprises for each site q cameras disposed in front of the participants of said site so that each camera is located in separate display zones on the screen of the different groups of distant participants.

7. Video conference system according to any one of the preceding claims, in which the video conference is held between N sites, **characterised in that** the number q of cameras per site is greater than or equal to 2 to reconstitute the picture recording perspective effects.

8. Video conference system according to any one of claims 1 to 6, in which the video conference is held between just two distant sites, **characterised in that** one camera (CA1) produces a partial recording of the pictures of the local site comprising a first group of participants, **in that** the other camera (CA2) produces a partial recording of the pictures of the local site comprising a second group of participants, and **in that** the two pictures are juxtaposed to allow all the participants to be displayed.

9. Video conference system according to any one of claims 1 to 8, in which a plurality of cameras are used to record the pictures, **characterised in that** said cameras (CA1; CA2) are placed under the projected pictures.

10. Video conference system according to any one of the preceding claims, **characterised in that** it additionally comprises a plurality of video projectors or overhead projectors (PR1, PR2) of the cathode ray tube type or liquid crystal type to reproduce the pictures to a scale close to 1:1.

11. Video conference system according to any one of the preceding claims, **characterised in that** it comprises means for processing pictures for each site suitable for obtaining juxtaposition or superposition of the pictures (301, 304) received from the distant sites to allow all the pictures to be displayed on the screen (10).

12. Video conference system according to any one of the preceding claims, in which the sites are linked directly through a high-capacity transmission network (R) or indirectly through a video conference bridge or through a network and a video conference bridge.

13. Video conference system according to any one of the preceding claims, **characterised in that** the processing means comprise:
- a unit for processing and management of the microcomputer type or workstation type (100A, ..., 100K);
- video coders-decoders (303-306) and audio coders-decoders controlled by the processing unit, and
- transmission adaptation interfaces (301, 302, 204) for said network.

14. Video conference system according to claim 13, **characterised in that** the network is a transmission network operating in asynchronous transfer mode of the ATM type, **in that** the transmission interfaces for the audio visual signals are interfaces of type AAL1 and **in that** the transmission interfaces for the signals controlling the video conference between the processing units are interfaces of type AAL5.
